(19) Europäisches Patentamt
European Patent Office
Office européen des brevets

(11) EP 4 485 283 A1

(12) EUROPEAN PATENT APPLICATION

(43) Date of publication:
**01.01.2025 Bulletin 2025/01**

(21) Application number: **23206623.3**

(22) Date of filing: **30.10.2023**

(51) International Patent Classification (IPC):
***G06N 3/082*** *(2023.01)*

(52) Cooperative Patent Classification (CPC):
**G06N 3/082;** G06N 3/0499

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.06.2023 IN 202341042829**

(71) Applicant: **L & T Technology Services Limited
Chennai 600 089 (IN)**

(72) Inventors:
- **Gunasekaran, Suresh
632301 Arani (IN)**
- **Subramani, Vikram
635120 Bargur (IN)**
- **Bhadauria, Sudhir
382418 Ahmedabad (IN)**
- **Rajan, Santhiya
641045 Coimbatore (IN)**

(74) Representative: **Studio Torta S.p.A.
Via Viotti, 9
10121 Torino (IT)**

# (54) METHOD AND SYSTEM OF COMPRESSING NEURAL NETWORK MODELS BASED ON NETWORK ARCHITECTURE DESIGN

(57) A method and system of compressing a neural network model (NNM) is disclosed. The method includes determining filter contribution information and position wise contribution information of each of the plurality of layers based on a total number of the plurality of layers in the NNM, a total number of the plurality of filters in the NNM, and a number of filters in each of the plurality of layers. A layer score is determined based on a type of layer for each of the plurality of layers and a predefined scoring criteria. A pruning control parameter is determined of each of the plurality of layers based on the layer score, the filter contribution information and the position wise contribution information of the corresponding layers. A layer-wise pruning rate is determined of each of the plurality of layers based on the pruning control parameter and the pre-defined pruning ratio.

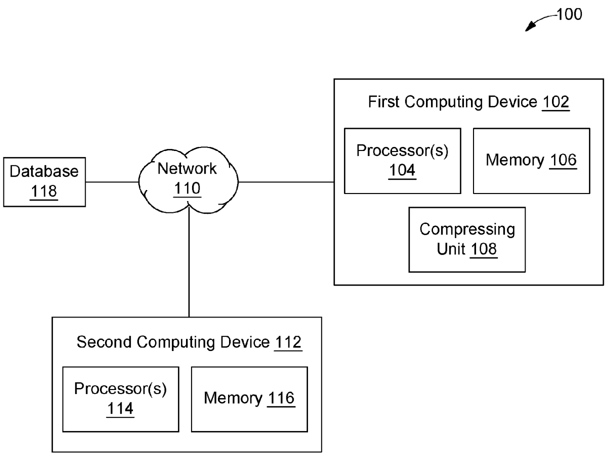


FIG. 1

EP 4 485 283 A1

## Description

The following specification describes the invention and the manner in which it is to be performed.

## Technical Field

This disclosure relates generally to neural networks, and more particularly to a method and a system of pruning neural networks.

## BACKGROUND

The main challenge with using current state of the art Artificial Intelligence (AI) for real time applications is that the deployment devices are resource constrained. The deployment devices may be smartphones, single board computers, micro controllers, drones, wearables, smartphones, etc. having constraints with respect to memory and processing power. Since, most portable deployment devices may be designed to be light weight and may thus have less storage capacity, less processing capacity. Also, most portable devices are powered by batteries and cannot afford high computational tasks which may cause excessive battery usage and may lead to rapid discharging of the battery. Accordingly, in order to deploy Deep Neural Network (DNN) models in such portable deployment devices, there is a requirement for the DNN models to have less computational cost and must be light weight without losing accuracy.

Therefore, in order for DNN models to be efficiently deployed on deployment devices and have less computation cost while running on such device, there is a requirement for an efficient methodology to compress these DNNs without affecting its accuracy.

## SUMMARY OF THE INVENTION

In an embodiment, a method of compressing a neural network model (NNM) is disclosed. The method may include, receiving, by a first computing device, a predefined pruning ratio and one or more device configuration of a second computing device deploying the NNM. In an embodiment, the NNM may include a plurality of layers in a first sequence. The first computing device may further determine filter contribution information and position wise contribution information of each of the plurality of layers based on a total of the plurality of layers in the NNM, a total number of the plurality of filters in the NNM, and a number of filters in each of the plurality of layers. The first computing device may further determine a layer score based on a type of layer for each of the plurality of layers and a predefined scoring criteria. Further, the first computing device may determine a pruning control parameter of each of the plurality of layers based on the layer score, the filter contribution information and the position wise contribution information of the corresponding layers. The first computation device may further determine a layer-wise pruning rate of each of the plurality of layers based on the pruning control parameter and the pre-defined pruning ratio. Further, the first computation device may compress the NNM based on the layer-wise pruning rate.

In another embodiment, a system of compressing a neural network model (NNM) is disclosed. The system may include a processor, a memory communicably coupled to the processor, wherein the memory may store processor-executable instructions, which when executed by the processor may cause the processor to receive by a first computing device, a predefined pruning ratio and one or more device configuration of a second computing device deploying the NNM. In an embodiment, the NNM may include a plurality of layers in a first sequence. The first computing device may further determine filter contribution information and position wise contribution information of each of the plurality of layers based on a total of the plurality of layers in the NNM, a total number of the plurality of filters in the NNM, and a number of filters in each of the plurality of layers. The first computing device may further determine a layer score based on a type of layer for each of the plurality of layers and a predefined scoring criteria. Further, the first computing device may determine a pruning control parameter of each of the plurality of layers based on the layer score, the filter contribution information, and the position wise contribution information of the corresponding layers. The first computation device may further determine a layer-wise pruning rate of each of the plurality of layers based on the pruning control parameter and the pre-defined pruning ratio. Further, the first computation device may compress the NNM based on the layer-wise pruning rate.

Various objects, features, aspects, and advantages of the inventive subject matter will become more apparent from the following detailed description of preferred embodiments, along with the accompanying drawing figures in which like numerals represent like components.

## BRIEF DESCRIPTION OF THE DRAWINGS

The accompanying drawings, which are incorporated in and constitute a part of this disclosure, illustrate exemplary embodiments and, together with the description, serve to explain the disclosed principles.

**FIG. 1** illustrates a block diagram of an exemplary neural network model (NNM) compressing system, in accordance with some embodiments of the present disclosure.

**FIG. 2** is a functional block diagram of the compressing unit, in accordance with some embodiments of the present disclosure.

**FIG. 3** illustrates a VGG13 neural network model as an exemplary NNM, in accordance with an embodiment of the present disclosure.

**FIG. 4** illustrates a table depicting exemplary properties of the plurality of layers of VGG13 architecture, in accordance with an embodiment of the present disclosure.

**FIG. 5** illustrates a table depicting determination of filter contribution score of each of the plurality of layers of VGG13 architecture, in accordance with some embodiment of the present disclosure.

**FIG. 6** illustrates a table depicting determination of group wise contribution score of each of the layer groups, in accordance with some embodiment of the present disclosure.

**FIG. 7** illustrates a table depicting determination of group score of each of the layer groups, in accordance with some embodiment of the present disclosure.

**FIG. 8** illustrates a table depicting determination of layer score of each of the plurality of layers, in accordance with some embodiment of the present disclosure.

**FIG. 9A** and **FIG. 9B** illustrate two tables depicting exemplary predefined scoring criteria for computing layer score for types plurality of layers, in accordance with some embodiment of the present disclosure.

**FIG. 10** illustrates a table depicting sorted first layer group, the second layer group and the third layer group, in accordance with some embodiments of the present disclosure.

**FIG. 11** illustrates a table depicting clusters of the first layer group, the second layer group and the third layer group of the VGG13 architecture, in accordance with some embodiments of the present disclosure.

**FIG. 12** illustrates a table depicting cluster-wise position score of each cluster of each of the layer group of the VGG13 architecture, in accordance with some embodiments of the present disclosure.

**FIG. 13** illustrates a table depicting layer-wise position score of each of the plurality of layers of the VGG13 architecture, in accordance with some embodiments of the present disclosure.

**FIG. 14** illustrates a table depicting pruning control parameter of each of the plurality of layers of the VGG13 architecture, in accordance with some embodiments of the present disclosure.

**FIG. 15** illustrates a table depicting layer-wise pruning ratio of each of the plurality of layers of the VGG13 architecture, in accordance with some embodiment of the present disclosure.

**FIG. 16** is a flowchart of a method of compressing neural network models, in accordance with some embodiments of the present disclosure.

## DETAILED DESCRIPTION OF THE DRAWINGS

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered exemplary only, with the true scope being indicated by the following claims. Additional illustrative embodiments are listed.

Further, the phrases "in some embodiments", "in accordance with some embodiments", "in the embodiments shown", "in other embodiments", and the like mean a particular feature, structure, or characteristic following the phrase is included in at least one embodiment of the present disclosure and may be included in more than one embodiment. In addition, such phrases do not necessarily refer to the same embodiments or different embodiments. It is intended that the following detailed description be considered exemplary only, with the true scope being indicated by the following claims.

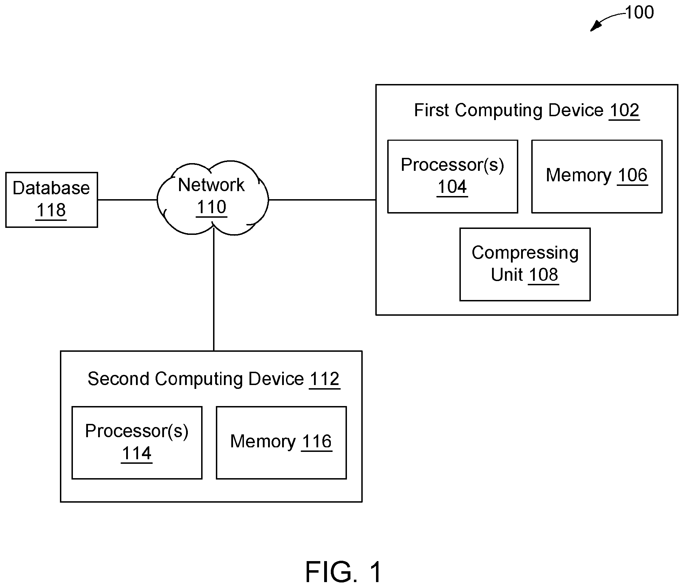

Referring now to **FIG. 1,** a block diagram of an exemplary neural network model (NNM) compressing system, in accordance with some embodiments of the present disclosure. The NNM compressing system 100 may include a first computing device 102, a second computing device 112, a database 118 communicably coupled to each other through a wired or a wireless communication network 110. The first computing device 102 may include a processor 104, a memory 106 and a compressing compressing unit 108. The second computing device 112 may include a processor 114, a memory 116. In an embodiment, examples of processor(s) 104 and 114 may include, but are not limited to, an Intel® Itanium® or Itanium 2 processor(s), or AMD® Opteron® or Athlon MP® processor(s), Motorola® lines of processors, Nvidia®, FortiSOC™ system-on-a-chip processors or other future processors. The memories 106 and 116 may store instructions that, when executed by the processor 104, cause the processor 104 to compress the NNMs. The memories 106 and 116 may be a non-volatile memory or a volatile memory. Examples of non-volatile memory may include but are not limited to a flash memory, a Read Only Memory (ROM), a Programmable ROM (PROM), Erasable PROM (EPROM), and Electrically EPROM (EEPROM) memory. Examples of volatile memory may include but are not limited to Dynamic Random Access Memory (DRAM), and Static Random-Access memory (SRAM).

In an embodiment, the database 118 may be enabled in a cloud or physical database comprising data such as configuration information of the first device 102 or the second device 112. In an embodiment, the database 118 may store data inputted or generated by the second computing device 112 or the first computing device 102.

In an embodiment, the communication network 110 may be a wired or a wireless network or a combination thereof. The network 110 can be implemented as one of the different types of networks, such as but not limited to, ethernet IP network, intranet, local area network (LAN), wide area network (WAN), the internet, Wi-Fi, LTE network, CDMA network, 5G and the like. Further, network 110 can either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further network 110 can include a variety of network devices, including routers, bridges, servers, computing devices, storage devices, and the like.

In an embodiment, the first computing device 102 and the second computing device 112 may be same devices or may be integrated into each other. In an embodiment, the first computing device 102 and the second computing device 112 may be computing systems, including but not limited to, a smart phone, a laptop computer, a desktop computer, a notebook, a workstation, a portable computer, a personal digital assistant, a handheld, or a mobile device. In an embodiment, the compressing unit 108 may be implemented on the first computing device 102 and the processor 104 may enable the compression of the NNM deployed on the second computing device 112. In an embodiment, the first computing device 102 and the second computing device 112 may be enabled as a single device and the corresponding processor 104 or 114 and the memory 106 or 116 may be utilized for performing the compression of the NNM. In an embodiment, the compressing unit 108 may be part of second the computing device 112 deploying the NNM or communicably connected to the second computing device 112.

In an embodiment, a neural network model may include interconnection of numerous neurons to form an architecture. In an embodiment, neurons may also be interchangeably referred to as filters. In an embodiment, different techniques for model compression may be used such as, but not limited to, pruning, quantization, factorization and knowledge distillation, and so on. In an embodiment, pruning may be the process of removing less important or redundant neurons in an NNM that may not contribute much to the accuracy of the network. However, pruning may reduce the computational complexity of the network and may make the NNM less device resource intensive. Further, different types of pruning may be performed such as, structured and unstructured, depending on shape of neurons to be pruned. Further, depending on the time at which pruning is performed static or dynamic pruning may be performed. Further, based on a pruning ratio, local or global pruning may be performed.

In an embodiment, the NNMs may be pruned using global pruning methodology or local pruning methodology. In an embodiment, local pruning methodology is a type of pruning technique wherein a predefined number of neurons/connections of the NNM may be removed from all layers in the networks. For example, in case a local pruning ratio is predefined to be 20%, then local pruning may remove 20% of neurons in each of the layers in the model.

In another embodiment, the global pruning methodology is a type of pruning technique in which all parameters across all layers may be combined and a predefined fraction of the neurons/connections are selected randomly for pruning. For example, in case a global pruning ratio is predefined to be 20%, then global pruning may remove 20% of neurons in all of the layers in the network.

Further, in case of pruning based on global pruning ratio, selection of number of filters to be removed from each layer is very critical to the accuracy of the NNM. In an exemplary embodiment, in case one filter is removed from one of the depth layers of a VGG 16 model, may cause reduction of 9216 parameters and 14.5 million FLOPs. However, in case 2 filters are removed from one of the middle layers of the VGG16 model, there may be reduction of same number of parameters i.e. 9216 but reduction of 57.8 million FLOPs. Accordingly, the reduction of computational cost varies greatly based on selection of filters from the types of layers.

In a preferred embodiment, a number of filters to be pruned from each of the layers may be determined based on the predefined global pruning ratio for compressing a neural network model. Since, compressing an NNM based on the predefined pruning ratio may involve selection of filters randomly which may lead to removal of filters which may be crucial to the accuracy of the NNM. Accordingly, the currently disclosure provides a system and a methodology for compressing an NNM being deployed on the second computing device 112 based on a various filter characteristic, layer contribution characteristics and also configuration parameters of the second computing device 112 without affecting the accuracy of the NNM.

By way of an example, the processor 104 may receive a predefined pruning ratio and may determine one or more device configuration of the second computing device 112 deploying the NNM. In an embodiment, the NNM may be trained and may include a plurality of layers arranged in a first sequence. The compressing unit 108 may determine filter contribution information and position wise contribution information of each of the plurality of layers based on a total number of the plurality of layers in the NNM, a total number of the plurality of filters in the NNM, and a number of filters in each of the plurality of layers.

In an embodiment, the filter contribution information may be determined based on determination of a filter contribution score of each of the plurality of layers based on a ratio of the number of filters in a corresponding layer and the total number of filters in the NNM. In an embodiment, the filter contribution information may be indicative of a quantitative significance of a layer with respect to the NNM architecture with regard to the number filters in each layer.

In an embodiment, the position wise contribution information may be determined based on creation of a first layer group, a second layer group and a third layer group of the plurality of layers. In an embodiment, each of the first layer group, the second layer group and the third layer group may include an equal number of layers based on the first sequence. Further, the position wise contribution information may be determined based on determination of the group score of each of the first layer group, the second layer group and the third layer group based on a cumulative filter contribution score of each layer in the first layer group, the second layer group and the third layer group respectively and a predefined weight assigned to each of the first layer group, the second layer group and the third layer group.

Further, a layer-wise position score of each of the plurality of the layers may be determined based on the group score of the corresponding layer group to which the layer corresponds. Further, the compressing unit 108 may determine the layer score based on a type of layer for each of the plurality of layers and a predefined scoring criteria.

The compressing unit 108 may further determine a pruning control parameter of each of the plurality of layers based on the layer score, the filter contribution information, and the position wise contribution information of the corresponding layers. In an embodiment, the pruning control parameter may be determined based on an average of the layer-wise position score and the filter contribution score of each of the layers in the first layer group, the second layer group and the third layer group.

In an embodiment, the layer-wise position score may be determined by sorting layers in each of the layer groups based on the layer score, filter contribution score, a second sequence of layers in each of the layer groups. Upon sorting, the compressing unit 108 may create clusters the layers in each of the layer group into a predefined number of clusters based on a predefined ratio of the cumulative layer score for the corresponding layer group. In an embodiment, the layer-wise position score may be determined based on the predefined number of clusters, a number of layers in each cluster and the group score of the corresponding layer group.

Further, the compressing unit 108 may determine the layer-wise pruning rate of each of the plurality of layers based on the pruning control parameter and the pre-defined pruning ratio. The compressing unit 108 may compress the NNM deployed on the second computing unit 112 based on the layer-wise pruning rate. In an embodiment, the compression of the NNM may include the compressing unit 108 to determine the first number of filters to be pruned in the plurality of layers based on the predefined pruning ratio. Further, the compressing unit 108 determine a second number of filters to be pruned in each of the plurality of layers based on the layer-wise pruning rate of each of the plurality of layers and the first number of filters.

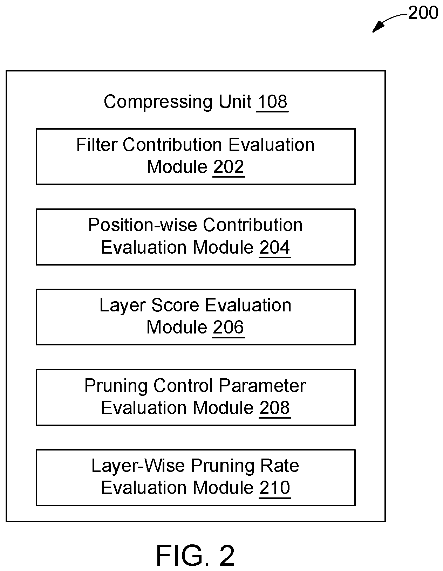

Referring now to **FIG. 2,** a functional block diagram of the optimization device, in accordance with some embodiments of the present disclosure. The compressing unit 108 may include a filter contribution evaluation module 202, a position-wise contribution evaluation module 204, a layer score evaluation module 206, a pruning control parameter evaluation module 208, a layer-wise pruning rate evaluation module 210.

The compressing unit 108 may receive the predefined pruning ratio and one or more device configuration of the second computing device 112 deploying the NNM. In an embodiment, the predefined pruning ratio may be the global pruning ratio which may be predefined by a user based on the type of NNM or the configuration information of the second computing device 112 deploying the NNM. In an exemplary embodiment, the NNM being deployed may be, but not limited to, ResNet, AlexNet, VGG network, MobileNet, Fast R-CNN, Mask R-CNN, YOLO, SSD, etc. In an embodiment, the NNM may be selected as per the processing requirement. However, for the NNM to be deployed on the second computing device 112 efficiently such that the NNM is able to perform its functionality with required accuracy it may be required to be compressed. The compression unit 108 may enable the compression methodology as provided in the current disclosure in order to make the NNM more robust by reducing them in size and decreasing inference time and resource efficient. Further, it may be noted that the compression methodology may not be restrictive of the type of input data being processed by the NNM. In an embodiment, the NNM may be used to process multiple types of data such as, but not limited to, image, (spectral, satellite, medical, etc.), video, audio and text.

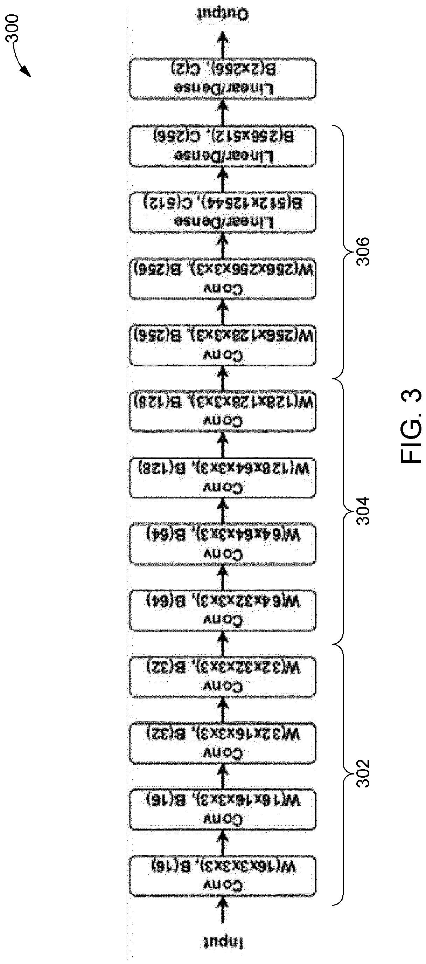

Referring now to **FIG. 3,** a VGG13 neural network model is shown as exemplary NNM, in accordance with some embodiment of the present disclosure. The VGG13 network 300 may be deployed on the second computing device 112. In an embodiment, the VGG13 network may include 13 layers including an output softmax layer.

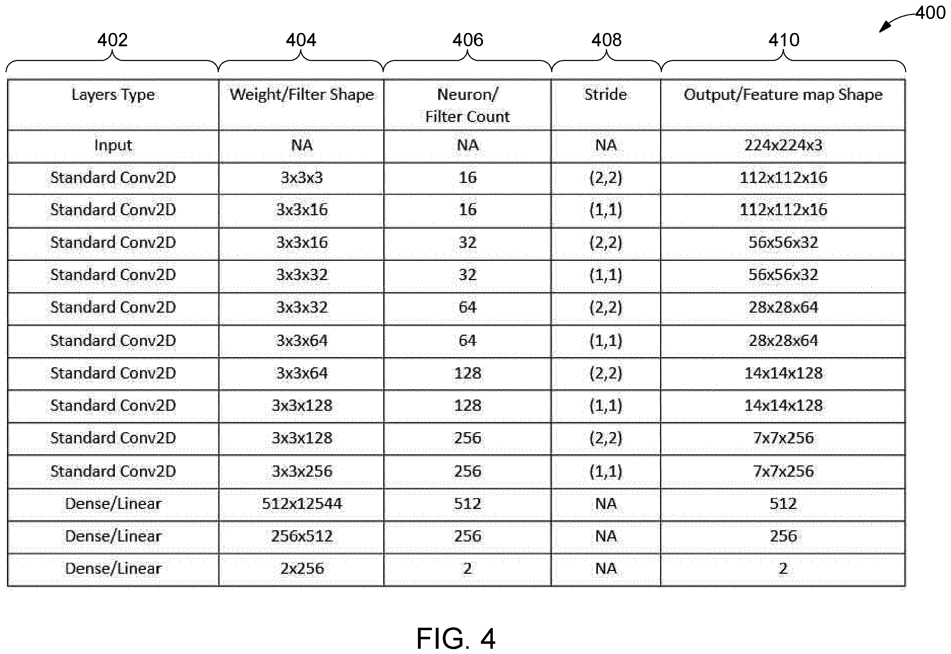

Referring now to **FIG. 4,** table 400 depicts exemplary properties of the plurality of layers of VGG13 architecture 300, in accordance with an embodiment of the present disclosure. The table 400 provides a list of layers with layer index 504 arranged in a first sequence as per the VGG13 architecture 300. Further, as described earlier a the plurality of layers are. It is to be noted that, the first sequence of layers is predefined based on the design of the VGG13 architecture. Further, in table 400, for each layer type 402, a weight per filter shape 404, a neuron per filter count 406, a stride 408 and an output per feature map shape 410 are provided.

Accordingly, the compressing unit 108 in order to compress the VGG13 model 300 may divide the initial 12 computational layers into three groups such as, but not limited to, initial group 302, middle group 304 and depth group 306 also referred to herein as the first layer group 302, the second layer group 304 and the third layer group 306 respectively. It is to be noted that each group may include equal number of layers.

The filter contribution evaluation module 202 may determine quantitative significance of a layer with respect to the NNM architecture such as VGG13 model 300 with regard to filter count. Accordingly, the filter contribution evaluation module 202 may determine the filter contribution information of each filter in each layer. In an embodiment, the filter contribution information may be determined based on determination of the filter contribution score of each of the plurality of layers based on the ratio of the number of filters in the corresponding layer and the total number of filters in the NNM. Accordingly, the filter contribution information may help in considering the properties and contribution of filters in each layer to the total architecture.

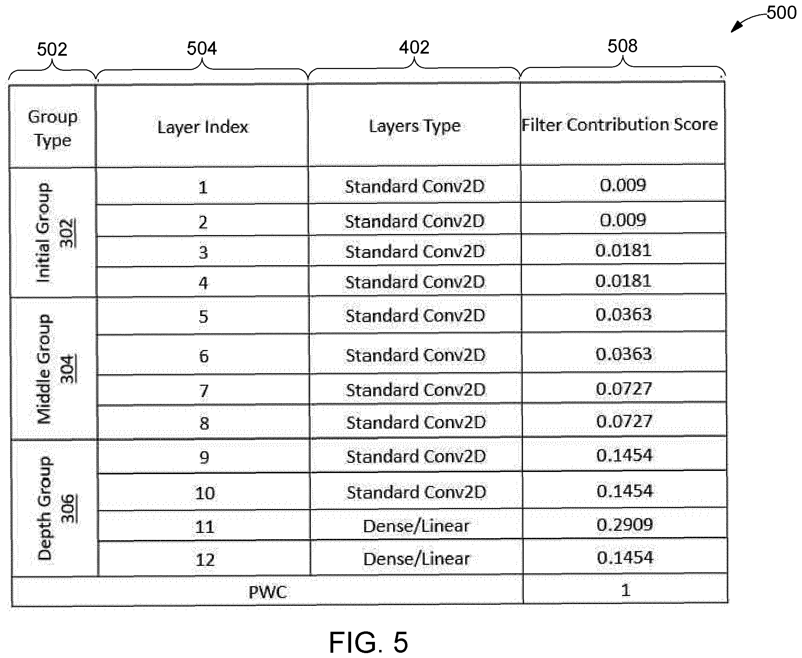

Referring now to **FIG. 5,** table 500 depicts determination of filter contribution score each of the plurality of layers of VGG 13 architecture 300, in accordance with some embodiment of the present disclosure. Table 500 provides the type of layers 402 as listed in Table 400 of the VGG13 model 300 being indexed based on a layer index 504 assigned to each layer. In the embodiment, the order of the layers as per the layer index 504 may define the first sequence. Further, as defined earlier, a group type 502 is indicated based on the group to which each layer belongs. For example, layers indexed 1-4 are assigned to initial group 302 and layers indexed 5-9 are assigned to middle group 304 and layers indexed 9-12 are assigned to depth group. Further, the group may also indicate a position of layers with respect to the may define the position of each of the plurality of layers with respect to the VGG13 architecture 300.

Further, a filter contribution score 508 may be computed for each layer in order to define the filter contribution score of each of the plurality of layers. The filter contribution score 508 of each of the plurality of layers may be determined based on a ratio of the number of filters 406 in a corresponding layer and a total number of filters in the NNM. In an embodiment, the total number of filters in the NNM may be determined based on a sum of the number of filters 406 in each of the plurality of layers.

Referring back to **FIG. 2,** the position-wise contribution evaluation module 204 may determine the position wise contribution information of each of the group type 502. In an embodiment, the position wise contribution information may be determined based on determination of a group score of each of the first layer group 302, the second layer group 304 and the third layer group 306.

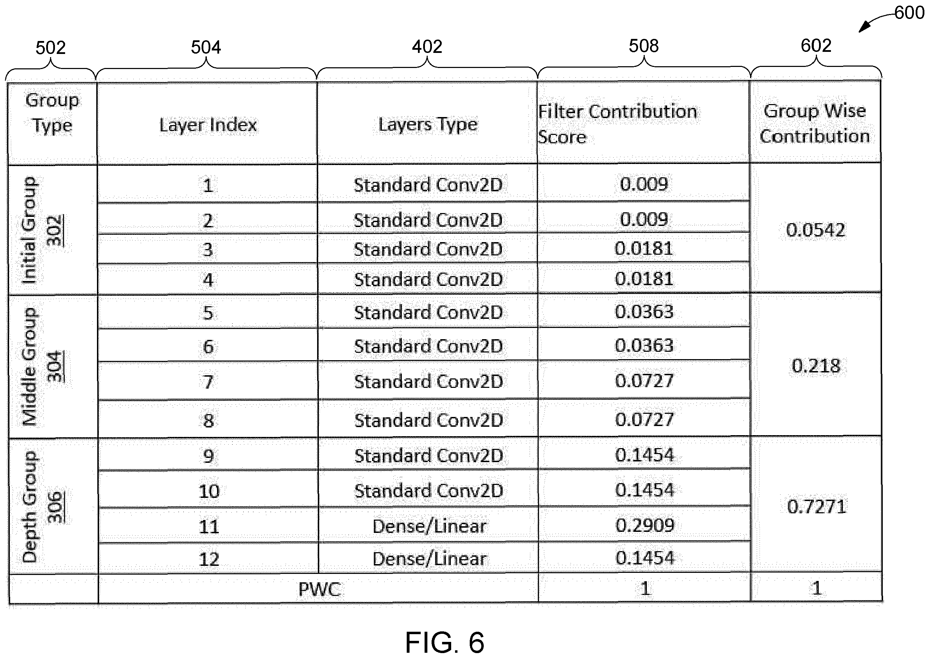

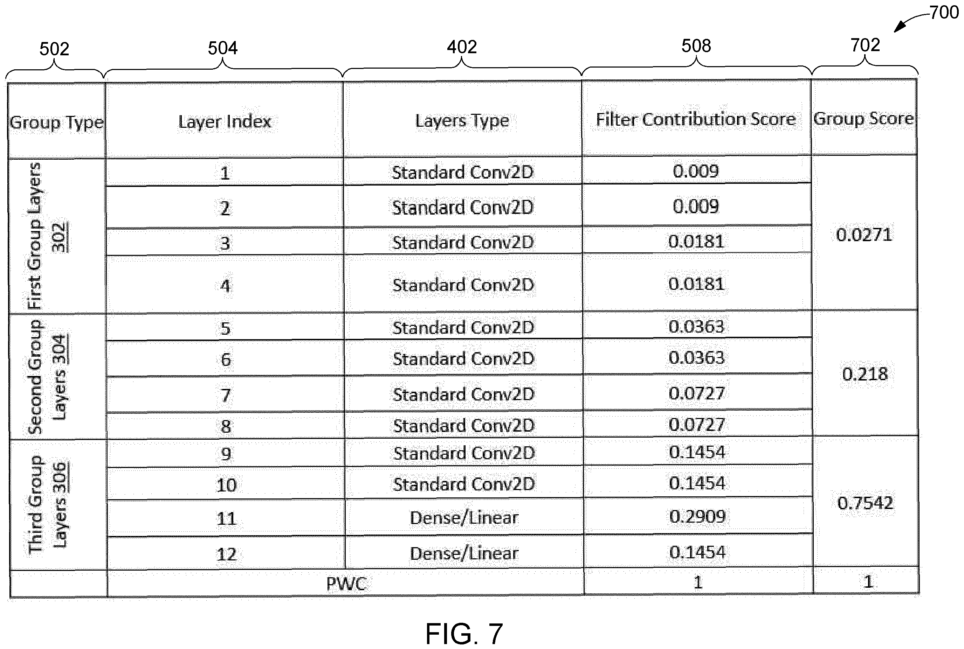

Referring now to **FIG. 6** and **FIG. 7,** tables 600 and 700 depict determination of group wise contribution score and group score 702 of each of the layer groups, in accordance with some embodiment of the present disclosure. In an embodiment, the group score 702 may be determined based on determination of a group wise contribution 602. The group wise contribution 602 may be determined by summing the filter contribution score 508 of layers in the first layer group 302, the second layer group 304 and the third layer group 306 respectively. Further, each of the first layer group 302, the second layer group 304 and the third layer group 306 respectively may be assigned a predefined weight. In an embodiment, the predefined weight for the first group layers 302 may be defined as '0.5' and the group score 702 may be computed as half of the sum of filter contribution score 508 of layers indexed 1-4, belonging to the first group layers 302. Further, the predefined weight for the second layer group 304 may be defined as "1". Accordingly, group score 702 for the second layer group 304 may be computed as sum of filter contribution score 508 of layers indexed 5-8, belonging to the second layer group 304. In an embodiment, the predefined weight for the third layer group 306 may be determined as "1+ 0.5* group score 702 of first group layers 302". Accordingly, the group score 702 of the third layer group 306 may be computed as sum filter contribution score 508 of layers indexed 9-12 and half of the group score 702 of the first group layers 302.

The formula for determining group score 702 of each of the first layer group 302, the second layer group 306 and the third layer group 306 are as follows:

$$group\ score_{first\ layer\ group} = 0.5 * position\ wise\ contribution_{first\ layer\ group} \quad \ldots\ldots \quad (1)$$

$$group\ score_{second\ layer\ group} = position\ wise\ contribution_{second\ layer\ group} \quad \ldots\ldots \quad (2)$$

$$group\ score_{third\ layer\ group} = position\ wise\ contribution_{third\ layer\ group} + 0.5 * position\ wise\ contribution_{first\ layer\ group} \quad \ldots\ldots \quad (3)$$

Referring back to **FIG. 2,** the layer score evaluation module 206 may determine a layer score for each of the plurality of layers based on the type of layer 402 for each of the plurality of layers and a predefined scoring criterion. In an embodiment, the predefined scoring criteria may be provided as a truth table for each type of NNM based on the type of layers 402, the NNM includes and the resource intensity of each type of layer based on the device configuration of a deployment device.

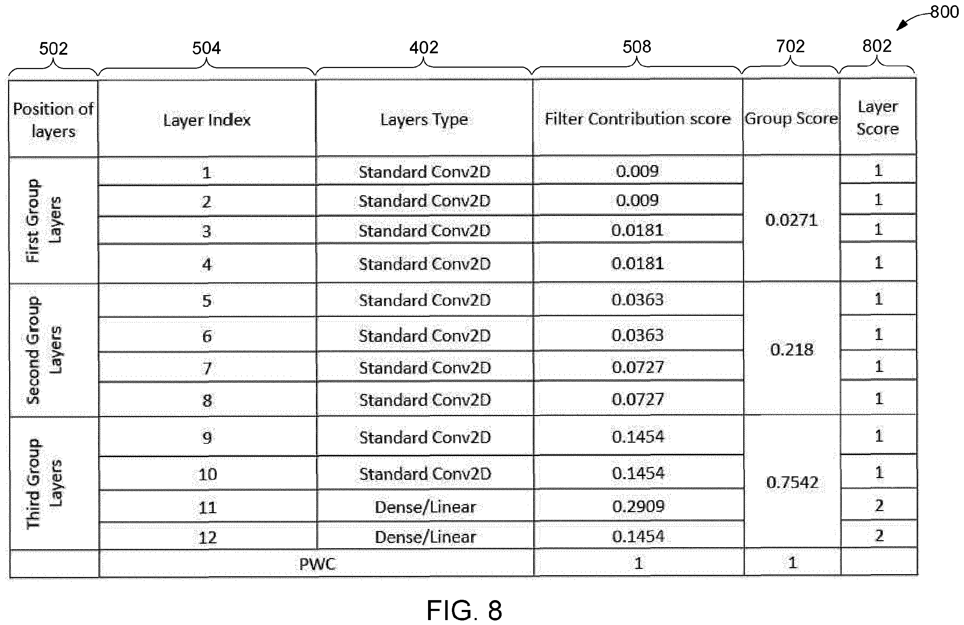

**FIG. 8** illustrates a table depicting determination of layer score 802 of each of the plurality of layers 504, in accordance with some embodiment of the present disclosure. In an embodiment, the layer score evaluation module 206 may determine the layer score of each of the plurality of layers 504 based on a type of layer 402 for each of the plurality of layers and a predefined scoring criterion.

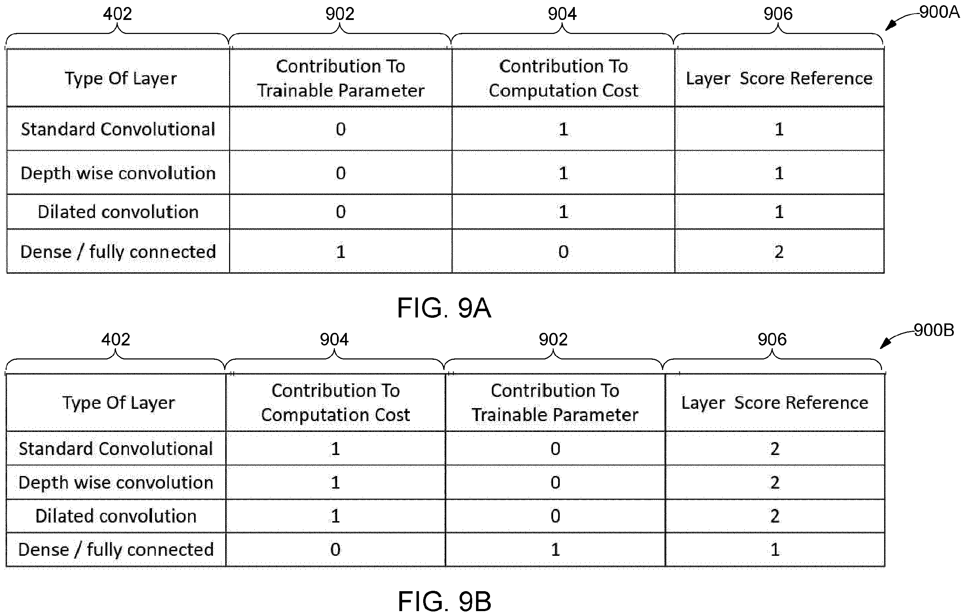

Referring now to **FIG. 9,** tables 900A and 900B depict exemplary predefined scoring criteria for computing layer score for types of plurality of layers, in accordance with some embodiment of the present disclosure. The table 900A depicts the layer score reference 906 for each type of layer 402 and based on its first precedence to contribution to computation cost 904 and second precedence to contribution to trainable parameter 902 such as memory and/or battery. In an embodiment, an increase in trainable parameter may increase memory requirement of the deployment device. Table 900B depicts the layer score reference 906 for each type of layer 402 and based on its first precedence to contribution to trainable parameter 902 such as memory and/or battery and second precedence to contribution to computation cost 904. Further, the table 900A and 900B may provide layer score reference 906 as decimal value of the defined precedence to contribution to computation cost 904 and precedence to contribution to trainable parameter 902 of each type of layer 402.

Accordingly, referring to tables 900A and 900B, a type of layer 402 in case is determined or defined to be contributing to the computation cost 904 then "1" may be assigned or else if it is not contributing to the computation cost 904 then "0" may be assigned. Accordingly, a type of layer 402 in case is determined or defined to be contributing to trainable parameter 902 then "1" may be assigned or else if it is not contributing to the computation cost 904 then "0" may be assigned. Further, the layer score reference 906 may be determined as a decimal value of each of the type of layer 402 based on the corresponding contribution to trainable parameter 902 and the contribution to computation cost 904.

Therefore, the layer score evaluation module 206 may determine the layer score 802 of each of the plurality of layers based on the type of layer 402 and the corresponding contribution to trainable parameter 902 and the contribution to computation cost 904 of each type of layer 402 as per the layer score reference 906 depicted in tables 900A or 900B.

The position wise contribution evaluation module 204 may then determine the position wise contribution information of each of the plurality of layers indexed 1-12 based on determination of a layer-wise position score of each of the plurality of the layers. In order to determine the layer-wise position score of each of the plurality of the layers, the position wise contribution evaluation module 204 may perform a first level sort by sorting each of the layers in the first layer group 302, the second layer group 304 and the third layer group 306 based on descending order of the layer score 802. Further, the position wise contribution evaluation module 204 may perform a second level sort by sorting each of the layers in the first layer group 302, the second layer group 304 and the third layer group 306 based on descending order of the filter contribution score 508. Further, the position wise contribution evaluation module 204 may perform a third level sort by sorting each of the layers in the first layer group 302, the second layer group 304 and the third layer group 306 based on descending order of the layer index 504.

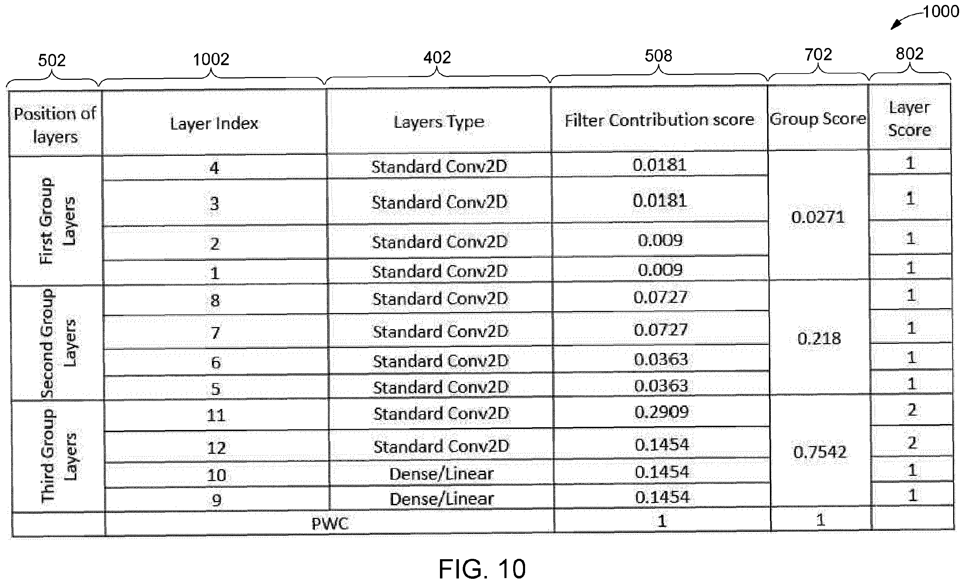

**FIG. 10** illustrates a table 1000 depicting sorted first layer group 302, the second layer group 304 and the third layer group 306, in accordance with some embodiments of the present disclosure. Column 1002 of the table 1000 depicts layers indexed 1-4 of the first layer group 302, layers indexed 5-8 of the second layer group 304 and the layer indexed 9-12 of the third layer group that have been listed as per the first level sort, the second level sort and the third level sort described above.

Post the first level sort, the second level sort and the third level sort, the position wise contribution evaluation module 204 may then cluster the layers in each of the first layer group 302, the second layer group 304 and the third layer group 306 into a predefined number of clusters based on a predefined ratio of a cumulative layer score for the corresponding layer group. In an embodiment, each of the first layer group 302, the second layer group 304 and the third layer group 306 may be clustered into two clusters.

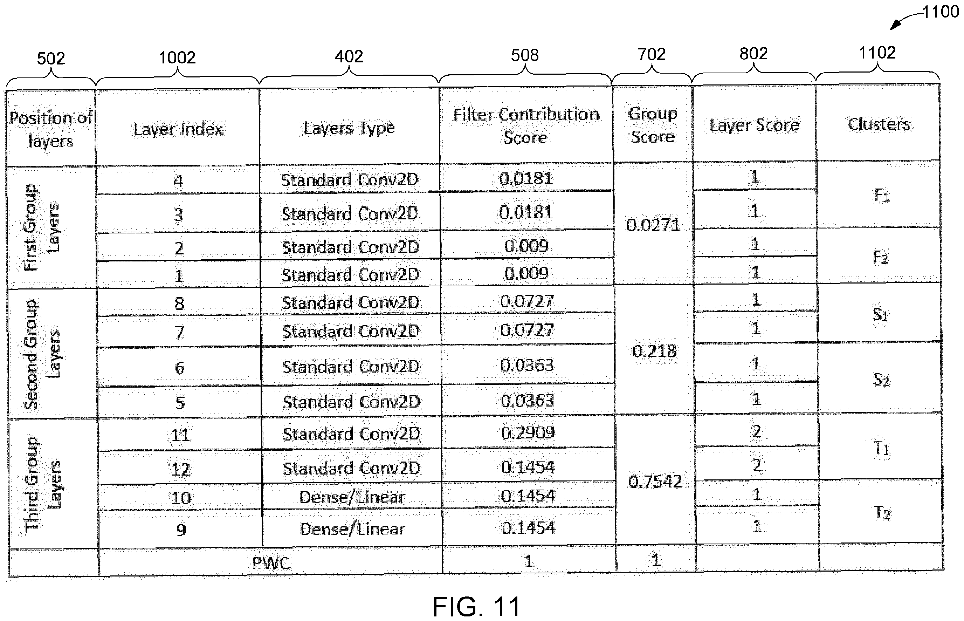

Referring now to **FIG. 11,** a table 1100 depicts clusters of the first layer group 302, the second layer group 304 and the third layer group 306 of the VGG13 architecture, in accordance with some embodiments of the present disclosure. Table 1100 depicts column 1102 identifying clusters F1 and F2 of the first layer group 302, clusters S1 and S2 of the second layer group 304 and clusters T1 and T2 of the third layer group 306. In an embodiment, each of the two clusters 1102 created for each of the first layer group 302, the second layer group 304 and the third layer group 306 may have a cumulative cluster layer score equal to half of a cumulative group layer score of each of the first layer group 302, the second layer group 304 and the third layer group 306 respectively. Accordingly, the layers of the first layer group 302, the second layer group 304 and the third layer group 306 may be clustered as per one or more clustering methodology such as, but not limited to, Shannon coding, etc. Accordingly, each cluster 1102 may include one or more layers such that the cumulative layer score of each cluster 1102 is half of the cumulative layer score 802 of the corresponding layer group 702.

**Table 1100** depicts that each group 502 may include two clusters 1102 each. Further, the position wise contribution evaluation module 204 may determine the cluster-wise position score based on the number of clusters created for each of the layer groups 502 and the group score 702 of each of the layer groups 502.

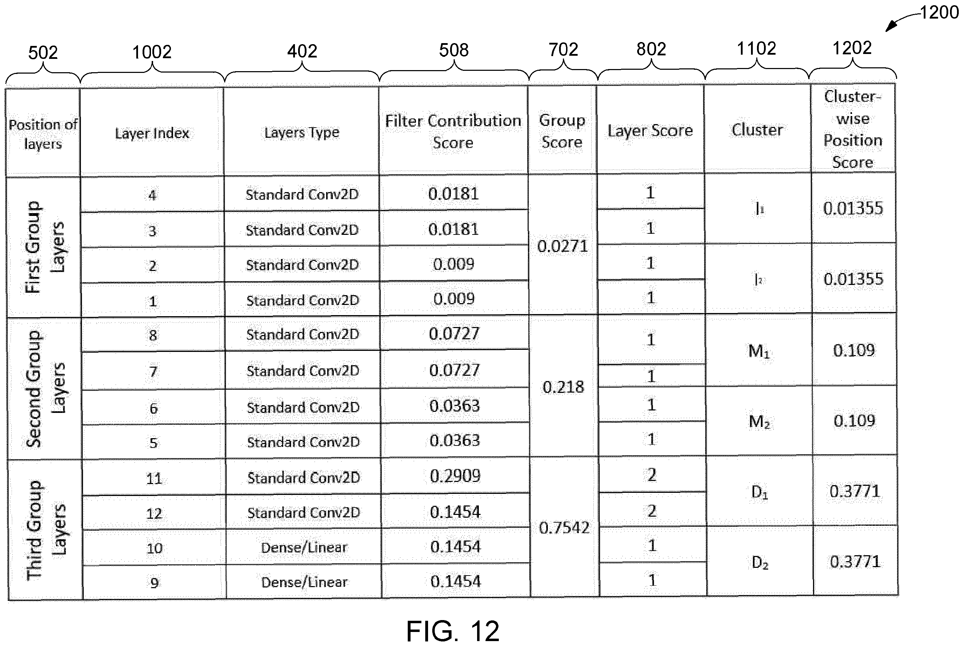

Referring now to **FIG. 12,** a table depicts cluster-wise position score 1202 of each cluster 1102 of each of the layer group 502 of the VGG13 architecture, in accordance with some embodiments of the present disclosure. Table 1200 depicts cluster-wise position score 1202 of each cluster 1102 of each of the layer group 502. The cluster-wise position score 1202 may be determined based on the number of clusters created for each of the layer groups 502. The cluster-wise position score column 1202 may be determined based on ratio of group score and number of clusters in a layer group 502. For example, in the current exemplary VGG13 architecture, each layer group 502 is clustered into two, hence, the cluster-wise position score 1202 may be determined as half of the group score 702.

Further, the position wise contribution evaluation module 204 may determine the layer-wise position score based on the number of layers in each cluster 1102 and the cluster-wise position score 1202 of each of the cluster 1102. cumulative layer score of each cluster 1102 and a number of layers in each cluster.

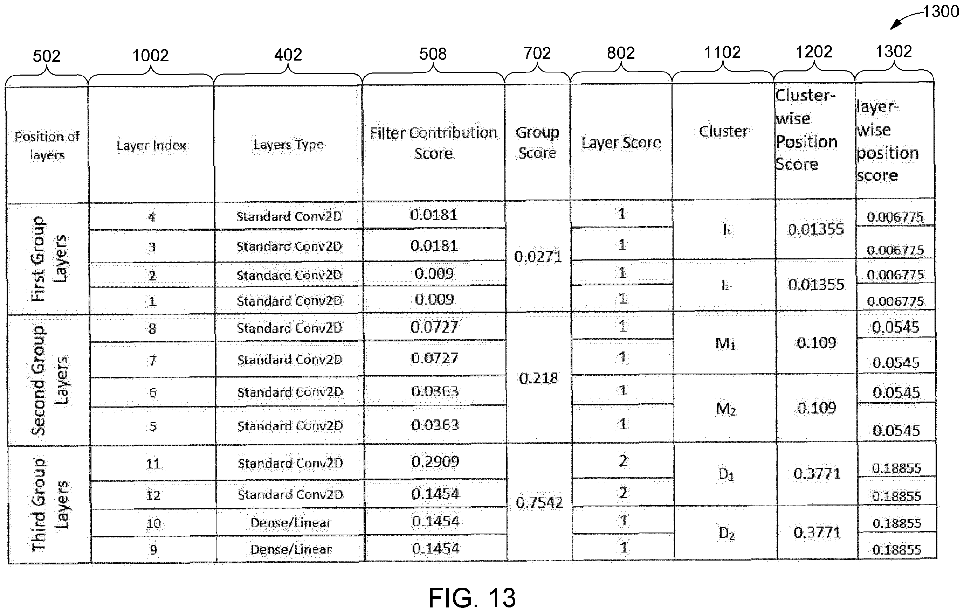

Referring now to **FIG. 13,** table 1300 depicts layer-wise position score 1302 of each of the plurality of layers of the VGG13 architecture, in accordance with some embodiments of the present disclosure. Table 1300 may depict layer-wise position score 1302 of each of the layers 1002 determined based on the cluster-wise position score 1202 of each cluster 1102 and a number of layers in cluster. The layer-wise position score column 1302 may define the layer-wise position score based on the predefined number of clusters, a number of layers in each cluster and the group score of the corresponding layer group. In an embodiment, each cluster 1102 comprises two layers, hence the layer-wise position score 1302 may be determined based on a ratio of the cluster-wise position score 1202 and the number of layers in each cluster, i.e. two.

Referring back to **FIG. 2,** the pruning control parameter evaluation module 208 may determine a pruning control parameter or pruning control rate of each of the plurality of layers 1002 based on the corresponding layer-wise position score 1302 and the filter contribution score 508. In an embodiment, the pruning control parameter or pruning control rate of each of the plurality of layers 1002 may be determined based on an average of the corresponding layer-wise position score 1302 and the filter contribution score 508.

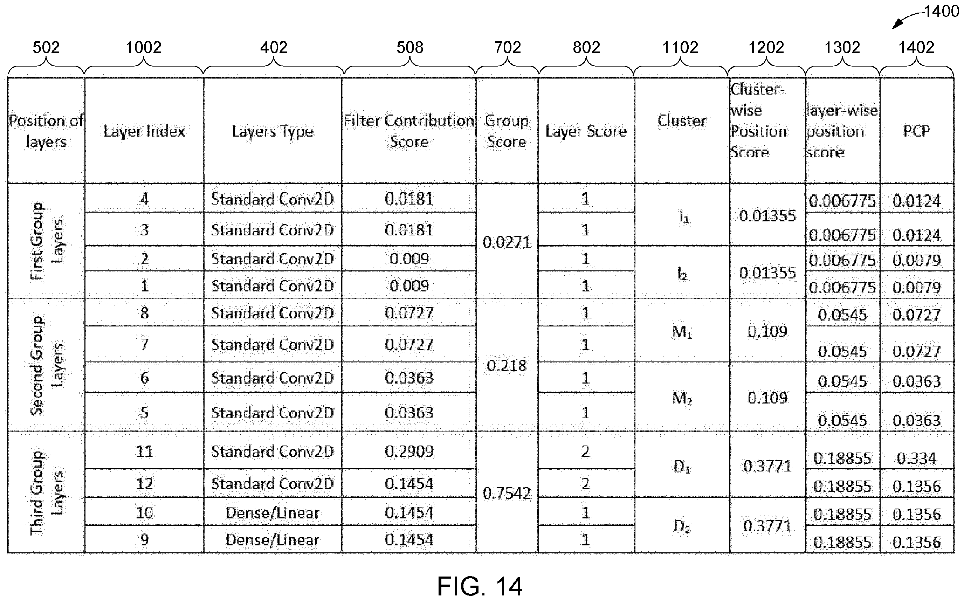

Referring now to **FIG. 14,** a table depicts pruning control parameter 1402 of each of the plurality of layers 1002 of the VGG13 architecture, in accordance with some embodiments of the present disclosure. Table 1400 may depict pruning control parameter 1402 being determined based on the layer-wise position score 1302 and the filter contribution score 508 of each of the layers 1002. In an embodiment, the pruning control parameter 1402 may be determined as an average of the layer-wise position score 1302 and the filter contribution score 508 of each of the layers 1002.

Referring back to **FIG. 2,** the layer-wise pruning rate evaluation module 210 may determine a layer-wise pruning rate of each of the plurality of layers 1002 based on the pruning control parameter 1402 and the pre-defined pruning ratio. In an embodiment, the layer-wise pruning rate evaluation module 210 may determine a second number of filters to be pruned or removed from each of the plurality of layers 1002 based on the pruning control parameter 1402 and a first number of filters to be pruned determined based on the predefined pruning ratio. In an embodiment, the total number of filters in the exemplary VGG13 architecture before pruning is determined based on a sum of filers in each of the plurality of layers 406. Accordingly, the total number of filters in the exemplary VGG13 architecture may be determined as "1760". In case the predefined pruning ratio is defined to be equal to "50%" then the first number of filters to be pruned from the exemplary VGG13 architecture may be determined as "880". Accordingly, layer-wise pruning rate evaluation module 210 may determine the second number of filters to be pruned in each layer based on a product of the pruning control parameter 1402 of a corresponding layer and the first number of filters to be pruned from the exemplary VGG13 architecture i.e. "880".

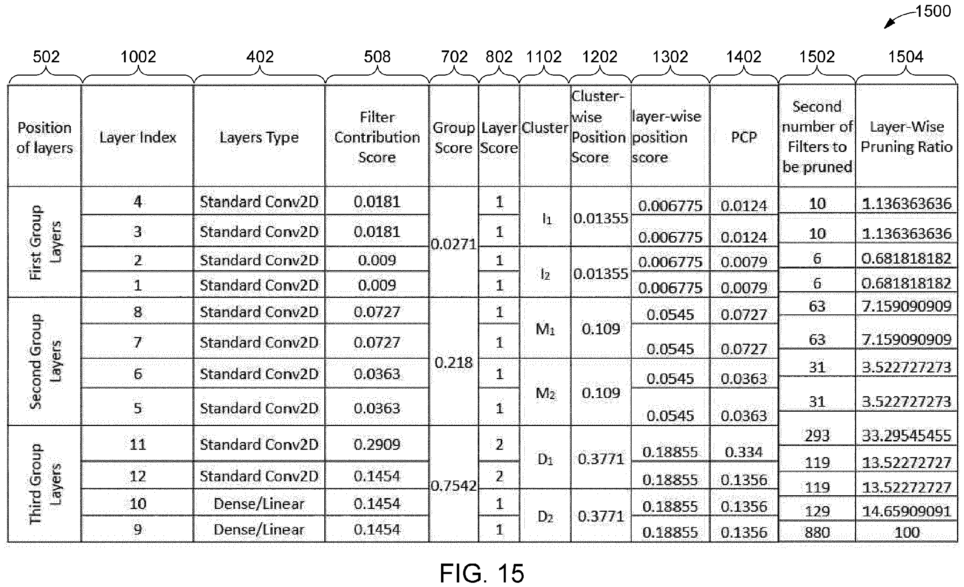

Referring now to **FIG. 15,** Table 1500 depicts layer-wise pruning ratio of each of the plurality of layers of the VGG13 architecture, in accordance with some embodiment of the present disclosure. Table 1500 depicts second number of filters to be pruned in each layer 1502 which may be determined based on the product of the pruning control parameter 1402 of each layer and the first number of filters to be pruned from the exemplary VGG13 architecture i.e. "880". Accordingly, the layer-wise pruning rate evaluation module 210 may determine a layer-wise pruning rate 1504 of each layer 1002 based on the percentage ratio of the second number of filters to be pruned in each layer 1502 and the first number of filters to be pruned from the exemplary VGG13 architecture i.e. "880". In an embodiment, the sum of second number of filters to be pruned in each layer 1502 is determined to equal to the first number of filters to be pruned determined based on the predefined pruning ratio. Further, a layer-wise pruning rate 1504 of each of the plurality of layers may be defined as the local pruning rate of each layer 1002 and may be determined based on the percentage of the second number of filters to be pruned 1502 of the corresponding layer to the first number of filters to be pruned in the architecture.

Further, the compressing unit 108 may further compress the NNM based on the layer-wise pruning rate 1502 determined for each layer 1002. In an embodiment, the compression of the NNM may include removal of the first number of filters 1502 determined for each of the plurality of layers 1002 from the corresponding layer by using one or more known pruning techniques and the connections between the removed filters may be reestablished to generate a pruned or compressed NMM model.

Accordingly, the compression unit 108 may compress the NNM by removing filters precisely in each layer without affecting the accuracy of the NNM and considering filter contribution factor, position of layer and type of layer while deciding the local pruning ratio for a particular layer. Accordingly, the compressing the NNM in an optimal way and preventing under-compression and/or over compression.

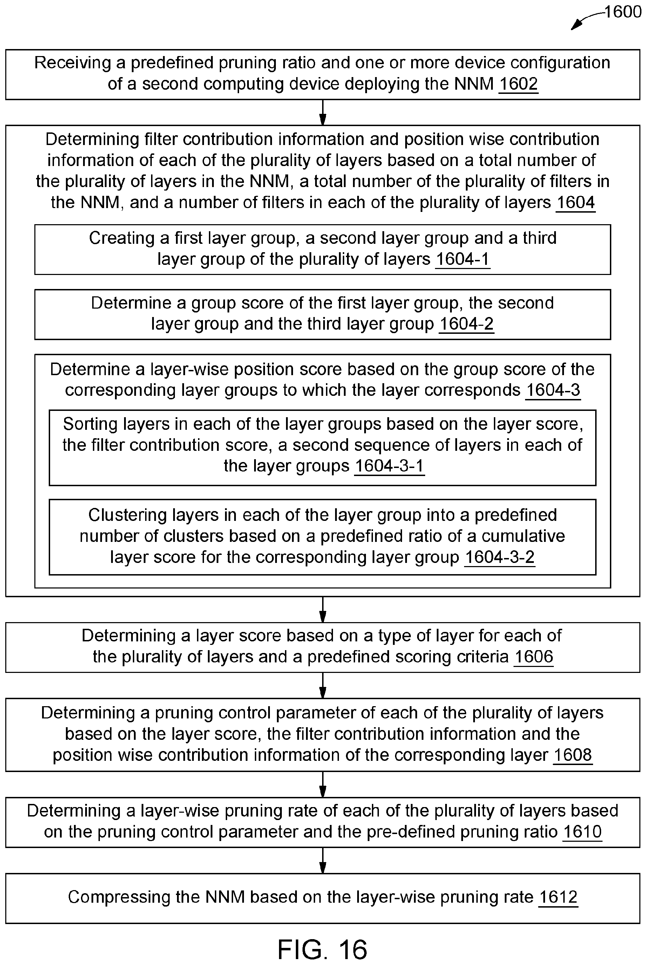

Referring now to **FIG. 16,** flowchart 1600 of a method of compressing neural network models (NNMs), in accordance with some embodiments of the present disclosure. In an embodiment, flowchart 1600 may include a plurality of steps that may be performed by the processor 104 to compress the neural network models.

At step 1602, the processor 104 may receive a predefined pruning ratio for an NNM and one or more device configuration of a second computing device deploying the NNM. In an embodiment, the NNM may comprise a plurality of layers 504 in a first sequence.

Further at step 1604, the processor 104 may determine filter contribution information 508 and position wise contribution information of each of the plurality of layers 504 based on a total number of the plurality of layers in the NNM, a total number of the plurality of filters in the NNM, and a number of filters in each of the plurality of layers 406. In an embodiment, the filter contribution information may be determined based on determination of the filter contribution score 508 of each of the plurality of layers based on a ratio of the number of filters 406 in a corresponding layer and the total number of filters in the NNM.

In an embodiment, the position wise contribution information may be determined based on creation of a first layer group 302, a second layer group 304 and a third layer group 306 of the plurality of layers at step 1604-1. In an embodiment, each of the first layer group, the second layer group and the third layer group may include an equal number of layers based on the first sequence. Further, at step 1604-2, a group score of each of the first layer group 302, the second layer group 304 and the third layer group 306 may be determined. In an embodiment, the group score at step 1604-2 may be determined based on the cumulative filter contribution score of each layer in the first layer group 302, the second layer group 304 and the third layer group 306 respectively and a predefined weight of each of the first layer group 302, the second layer group 304 and the third layer group 306. Further, at step 1604-3, a layer-wise position score 1302 may be determined based on determination of the the of each of the plurality of the layers based on the group score 702 of the corresponding layer groups 302-306 to which the layer corresponds.

Further at step 1606, the processor 104 may determine a layer score 802 based on a type of layer 402 for each of the plurality of layers and a predefined scoring criteria 900A and 900B.

In an embodiment, the layer-wise position score 1302 may be determined based on sorting layers in each of the layer groups 302-306 based on the layer score 802, the filter contribution score 508, a second sequence of layers 1002 in each of the layer groups at step 1604-3-1. Further, at step 1604-3-2 layers in each of the layer groups 302-306 may clustered into a predefined number of clusters 1102 based on a predefined ratio of a cumulative layer score for the corresponding layer group. In an embodiment, the position wise contribution information comprises determining the layer-wise position score 1302 which in turn may be determined based on the predefined number of clusters 1102, a number of layers in each cluster 1102 and the group score 702 of the corresponding layer group 302-306 determined in previous steps.

Further at step 1608, the processor 104 may further determine a pruning control parameter 1402 of each of the plurality of layers based on the layer score 802, the filter contribution information 608 and the position wise contribution information of the corresponding layers 1002. In an embodiment, the pruning control parameter may be determined based on an average of the layer-wise position score 1302 and the filter contribution score 508 of each of the layers in the first layer group 302, the second layer group 302 and the third layer group 302.

Further at step 1610, the processor 104 may determine a layer-wise pruning rate 1504 of each of the plurality of layers 1002 based on the pruning control parameter 1402 and the pre-defined pruning ratio.

Further at step 1612, the processor 104 may compress the NNM based on the layer-wise pruning rate 1504. In an embodiment, the compression of the NNM may include determining by the processor 104, the first number of filters to be pruned in the plurality of layers based on the predefined pruning ratio. The processor 104 may further determine the second number of filters to be pruned 1502 in each of the plurality of layers 1002 based on the layer-wise pruning rate 1502 and the first number of filters to be pruned.

It is intended that the disclosure and examples be considered as exemplary only, with a true scope of disclosed embodiments being indicated by the following claims.

## Claims

1. A method of compressing a neural network model (NNM), the method comprising:

    receiving, by a first computing device, a predefined pruning ratio and one or more device configuration of a second computing device deploying the NNM,
    wherein the NNM comprises a plurality of layers in a first sequence;
    determining, by the first computing device, filter contribution information and position wise contribution information of each of the plurality of layers based on a total number of the plurality of layers in the NNM, a total number of the plurality of filters in the NNM, and a number of filters in each of the plurality of layers;
    determining, by the first computing device, a layer score based on a type of layer for each of the plurality of layers and a predefined scoring criteria;
    determining, by the first computing device, a pruning control parameter of each of the plurality of layers based on the layer score, the filter contribution information and the position wise contribution information of the corresponding layers;
    determining, by the first computing device, a layer-wise pruning rate of each of the plurality of layers based on the pruning control parameter and the pre-defined pruning ratio; and
    compressing, by the first computing device, the NNM based on the layer-wise pruning rate.

2. The method as claimed in claim 1, wherein the determination of the filter contribution information comprises:
determining, by the first computing device, a filter contribution score of each of the plurality of layers based on a ratio of the number of filters in a corresponding layer and the total number of filters in the NNM.

3. The method as claimed in claim 1, wherein the determination of the position wise contribution information comprises:

    creating, by the first computing device, a first layer group, a second layer group and a third layer group of the of plurality of layers, wherein each of the first layer group, the second group and the third layer group comprises an equal number of layers based on the first sequence;
    determining, by the first computing device, a group score of each of the first layer group, the second layer group and the third layer group based on a cumulative filter contribution score of each layer in the first layer group, the second layer group and the third layer group respectively and a predefined weight of each of the first layer group, the second layer group and the third layer group; and
    determining, by the first computing device, a layer-wise position score of each of the plurality of the layers based on the group score of the corresponding layer group to which the layer corresponds.

4. The method as claimed in claim 3, wherein the determination of the layer-wise position score comprises:

    sorting layers in each of the layer groups based on the layer score, the filter contribution score, a second sequence of layers in each of the layer groups, and
    upon sorting, clustering layers in each of the layer group into a predefined number of clusters based on a predefined ratio of a cumulative layer score for the corresponding layer group,
    wherein the layer-wise position score is determined based on the predefined number of clusters, a number of layers in each cluster and the group score of the corresponding layer group.

5. The method as claimed in claim 3, wherein the pruning control parameter is determined based on an average of the layer-wise position score and the filter contribution score of each of the layer in the first layer group, the second layer group and the third layer group.

6. The method as claimed in claim 1, wherein the compression of the NNM comprises:

    determining, by the first computing device, a first number of filters to be pruned in the plurality of layers based on the predefined pruning ratio; and
    determining, by the first computing device, a second number of filters to be pruned in each of the plurality of layers based on the layer-wise pruning rate and the first number of filters of each of the plurality of layers.

7. A system of compressing a neural network model (NNM), the system comprising:

    a processor; and

a memory communicably coupled to the processor, wherein the memory stores processor-executable instructions, which, on execution by the processor, cause the processor to:

receive a predefined pruning ratio and one or more device configuration of a second computing device deploying the NNM,
wherein the NNM comprises a plurality of layers in a first sequence;
determine filter contribution information and position wise contribution information of each of the plurality of layers based on a total number of the plurality of layers in the NNM, a total number of the plurality of filters in the NNM, and a number of filters in each of the plurality of layers;
determine a layer score based on a type of layer for each of the plurality of layers and a predefined scoring criteria;
determine a pruning control parameter of each of the plurality of layers based on the layer score, the filter contribution information and the position wise contribution information of the corresponding layers;
determine a layer-wise pruning rate of each of the plurality of layers based on the pruning control parameter and the pre-defined pruning ratio; and
compress the NNM based on the layer-wise pruning rate.

**8.** The system as claimed in claim 7, wherein the determination of the filter contribution information comprises:
determine a filter contribution score of each of the plurality of layers based on a ratio of the number of filters in a corresponding layer and the total number of filters in the NNM.

**9.** The system as claimed in claim 7, wherein the determination of the position wise contribution information comprises:

create a first layer group, a second layer group and a third layer group of the of plurality of layers, wherein each of the first layer group, the second group and the third layer group comprises an equal number of layers based on the first sequence;
determine a group score of each of the first layer group, the second layer group and the third layer group based on a cumulative filter contribution score of each layer in the first layer group, the second layer group and the third layer group respectively and a predefined weight of each of the first layer group, the second layer group and the third layer group; and
determine a layer-wise position score of each of the plurality of the layers based on the group score of the corresponding layer group to which the layer corresponds.

**10.** The system as claimed in claim 9, wherein the determination of the layer-wise position score comprises:

sorting layers in each of the layer groups based on the layer score, filter contribution score, a second sequence of layers in each of the layer groups, and
upon sorting, clustering layers in each of the layer group into a predefined number of clusters based on a predefined ratio of a cumulative layer score for the corresponding layer group,
wherein the layer-wise position score is determined based on the predefined number of clusters, a number of layers in each cluster and the group score of the corresponding layer group.

**11.** The system as claimed in claim 9, wherein the pruning control parameter is determined based on an average of the layer-wise position score and the filter contribution score of each of the layer in the first layer group, the second layer group and the third layer group.

**12.** The system as claimed in claim 7, wherein the compression of the NNM comprises:

determine a first number of filters to be pruned in the plurality of layers based on the predefined pruning ratio; and
determine a second number of filters to be pruned in each of the plurality of layers based on the layer-wise pruning rate and the first number of filters of each of the plurality of layers.

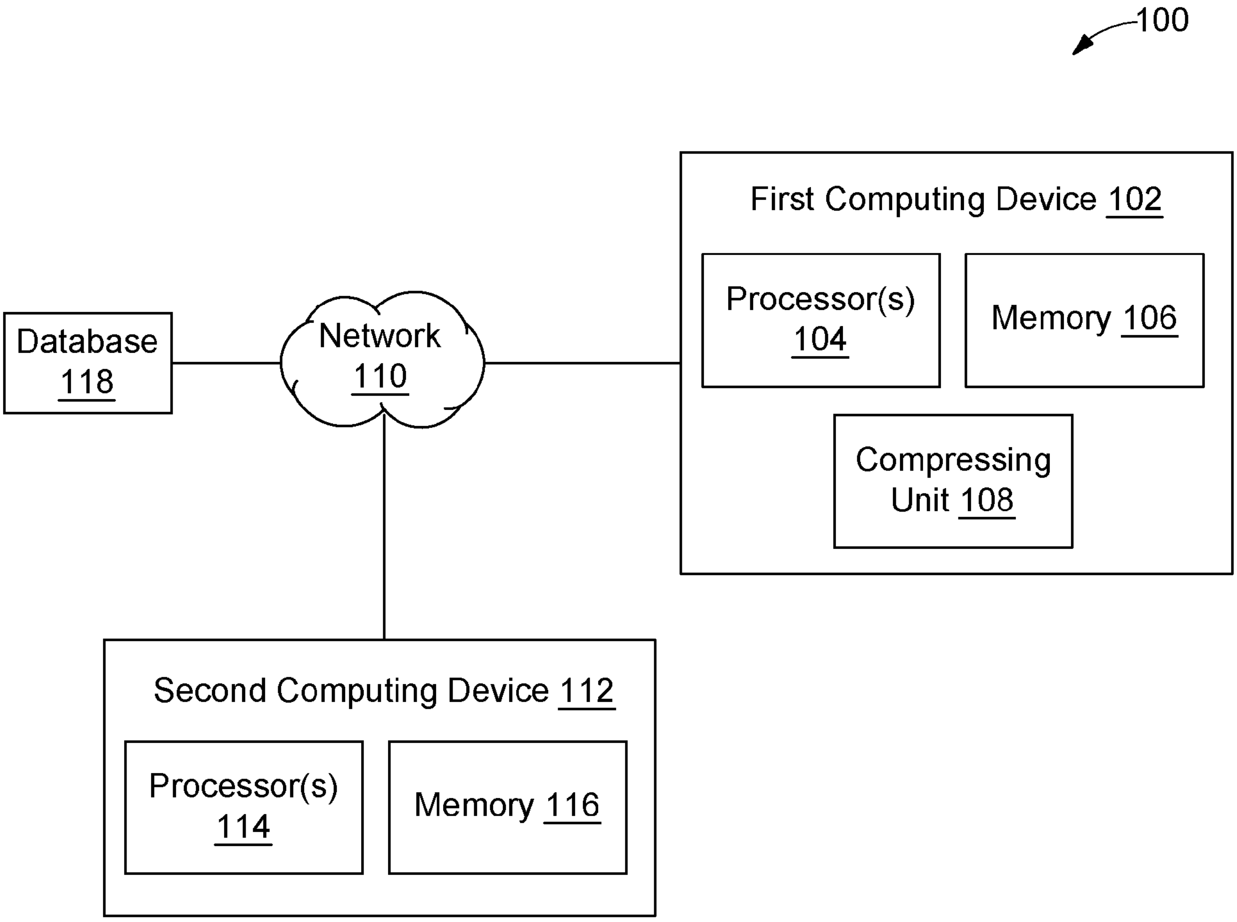
100
First Computing Device 102
Processor(s) 104
Memory 106
Compressing Unit 108
Database 118
Network 110
Second Computing Device 112
Processor(s) 114
Memory 116

FIG. 1

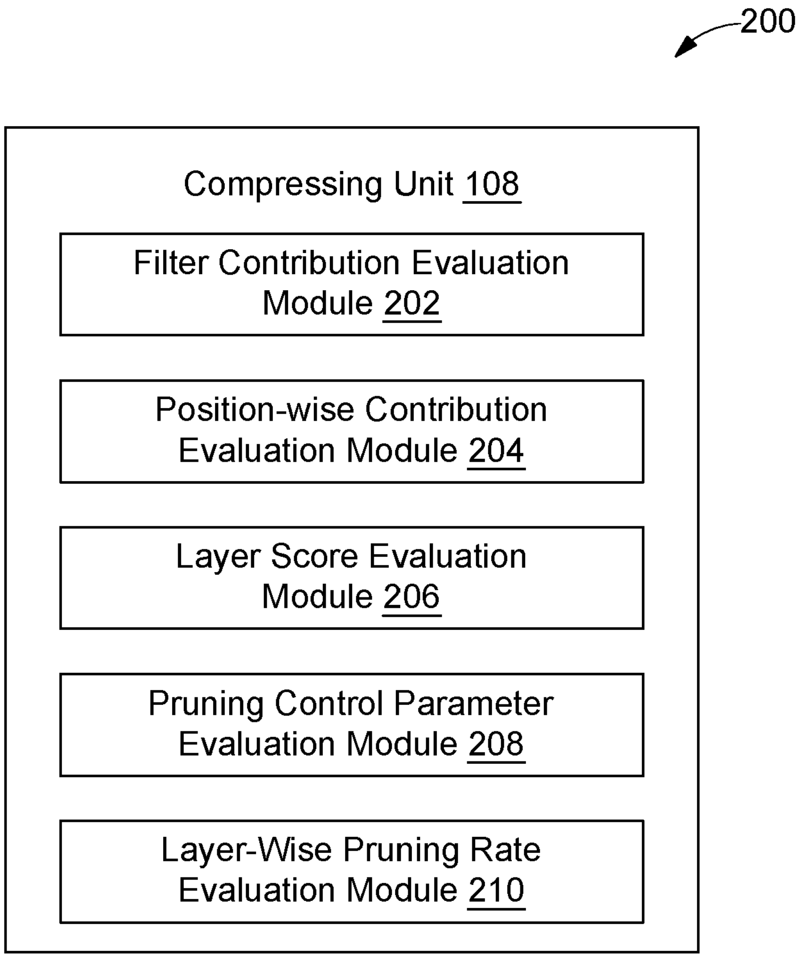
200
Compressing Unit 108
Filter Contribution Evaluation Module 202
Position-wise Contribution Evaluation Module 204
Layer Score Evaluation Module 206
Pruning Control Parameter Evaluation Module 208
Layer-Wise Pruning Rate Evaluation Module 210

FIG. 2

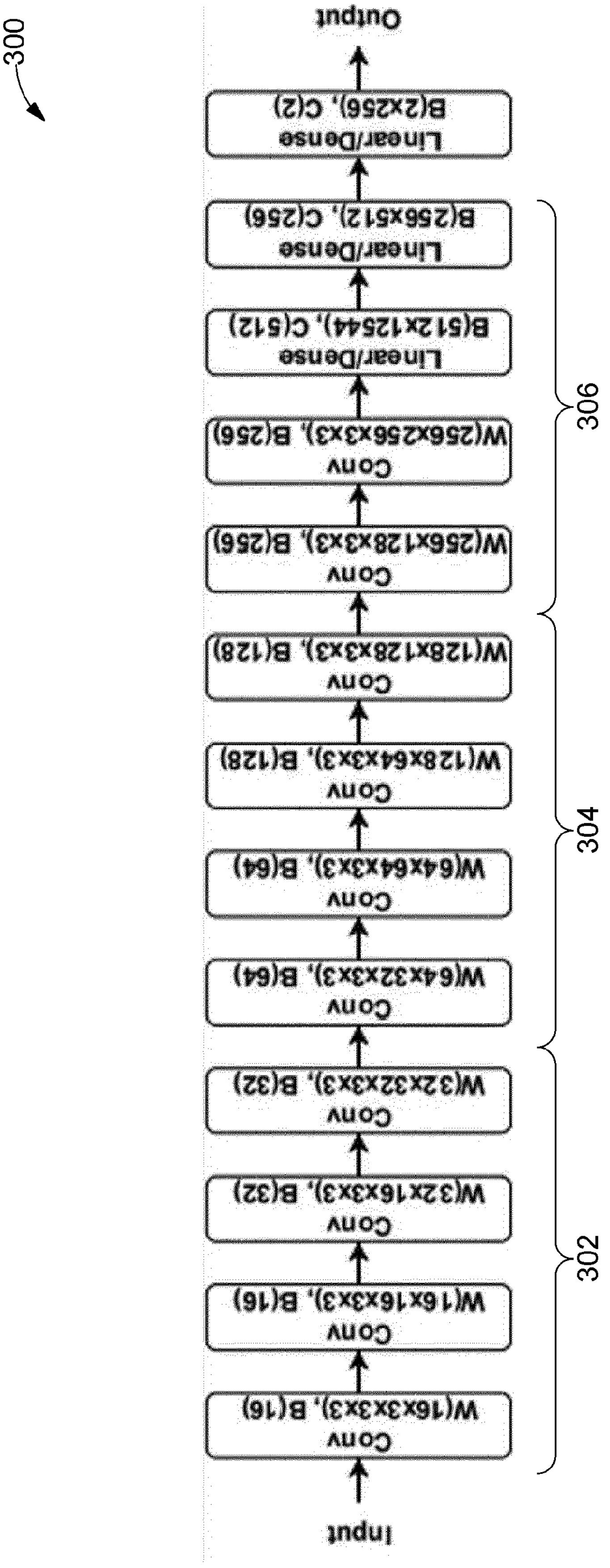
300
Input
Conv
W(16x3x3x3), B(16)
Conv
W(16x16x3x3), B(16)
Conv
W(32x16x3x3), B(32)
Conv
W(32x32x3x3), B(32)
302
Conv
W(64x32x3x3), B(64)
Conv
W(64x64x3x3), B(64)
Conv
W(128x64x3x3), B(128)
Conv
W(128x128x3x3), B(128)
304
Conv
W(256x128x3x3), B(256)
Conv
W(256x256x3x3), B(256)
Linear/Dense
B(512x12544), C(512)
Linear/Dense
B(256x512), C(256)
306
Linear/Dense
B(2x256), C(2)
Output

FIG. 3

400

| 402<br>Layers Type | 404<br>Weight/Filter Shape | 406<br>Neuron/ Filter Count | 408<br>Stride | 410<br>Output/Feature map Shape |
|---|---|---|---|---|
| Input | NA | NA | NA | 224x224x3 |
| Standard Conv2D | 3x3x3 | 16 | (2,2) | 112x112x16 |
| Standard Conv2D | 3x3x16 | 16 | (1,1) | 112x112x16 |
| Standard Conv2D | 3x3x16 | 32 | (2,2) | 56x56x32 |
| Standard Conv2D | 3x3x32 | 32 | (1,1) | 56x56x32 |
| Standard Conv2D | 3x3x32 | 64 | (2,2) | 28x28x64 |
| Standard Conv2D | 3x3x64 | 64 | (1,1) | 28x28x64 |
| Standard Conv2D | 3x3x64 | 128 | (2,2) | 14x14x128 |
| Standard Conv2D | 3x3x128 | 128 | (1,1) | 14x14x128 |
| Standard Conv2D | 3x3x128 | 256 | (2,2) | 7x7x256 |
| Standard Conv2D | 3x3x256 | 256 | (1,1) | 7x7x256 |
| Dense/Linear | 512x12544 | 512 | NA | 512 |
| Dense/Linear | 256x512 | 256 | NA | 256 |
| Dense/Linear | 2x256 | 2 | NA | 2 |

FIG. 4

500

| Group Type (502) | Layer Index (504) | Layers Type (402) | Filter Contribution Score (508) |
| --- | --- | --- | --- |
| Initial Group 302 | 1 | Standard Conv2D | 0.009 |
| | 2 | Standard Conv2D | 0.009 |
| | 3 | Standard Conv2D | 0.0181 |
| | 4 | Standard Conv2D | 0.0181 |
| Middle Group 304 | 5 | Standard Conv2D | 0.0363 |
| | 6 | Standard Conv2D | 0.0363 |
| | 7 | Standard Conv2D | 0.0727 |
| | 8 | Standard Conv2D | 0.0727 |
| Depth Group 306 | 9 | Standard Conv2D | 0.1454 |
| | 10 | Standard Conv2D | 0.1454 |
| | 11 | Dense/Linear | 0.2909 |
| | 12 | Dense/Linear | 0.1454 |
| PWC | | | 1 |

FIG. 5

600

| Group Type (502) | Layer Index (504) | Layers Type (402) | Filter Contribution Score (508) | Group Wise Contribution (602) |
|---|---|---|---|---|
| Initial Group 302 | 1 | Standard Conv2D | 0.009 | 0.0542 |
| | 2 | Standard Conv2D | 0.009 | |
| | 3 | Standard Conv2D | 0.0181 | |
| | 4 | Standard Conv2D | 0.0181 | |
| Middle Group 304 | 5 | Standard Conv2D | 0.0363 | 0.218 |
| | 6 | Standard Conv2D | 0.0363 | |
| | 7 | Standard Conv2D | 0.0727 | |
| | 8 | Standard Conv2D | 0.0727 | |
| Depth Group 306 | 9 | Standard Conv2D | 0.1454 | 0.7271 |
| | 10 | Standard Conv2D | 0.1454 | |
| | 11 | Dense/Linear | 0.2909 | |
| | 12 | Dense/Linear | 0.1454 | |
| | PWC | | 1 | 1 |

FIG. 6

700

502, 504, 402, 508, 702

| Group Type | Layer Index | Layers Type | Filter Contribution Score | Group Score |
|---|---|---|---|---|
| First Group Layers 302 | 1 | Standard Conv2D | 0.009 | 0.0271 |
| | 2 | Standard Conv2D | 0.009 | |
| | 3 | Standard Conv2D | 0.0181 | |
| | 4 | Standard Conv2D | 0.0181 | |
| Second Group Layers 304 | 5 | Standard Conv2D | 0.0363 | 0.218 |
| | 6 | Standard Conv2D | 0.0363 | |
| | 7 | Standard Conv2D | 0.0727 | |
| | 8 | Standard Conv2D | 0.0727 | |
| Third Group Layers 306 | 9 | Standard Conv2D | 0.1454 | 0.7542 |
| | 10 | Standard Conv2D | 0.1454 | |
| | 11 | Dense/Linear | 0.2909 | |
| | 12 | Dense/Linear | 0.1454 | |
| | PWC | | 1 | 1 |

FIG. 7

800

| Position of layers (502) | Layer Index (504) | Layers Type (402) | Filter Contribution score (508) | Group Score (702) | Layer Score (802) |
|---|---|---|---|---|---|
| First Group Layers | 1 | Standard Conv2D | 0.009 | 0.0271 | 1 |
| | 2 | Standard Conv2D | 0.009 | | 1 |
| | 3 | Standard Conv2D | 0.0181 | | 1 |
| | 4 | Standard Conv2D | 0.0181 | | 1 |
| Second Group Layers | 5 | Standard Conv2D | 0.0363 | 0.218 | 1 |
| | 6 | Standard Conv2D | 0.0363 | | 1 |
| | 7 | Standard Conv2D | 0.0727 | | 1 |
| | 8 | Standard Conv2D | 0.0727 | | 1 |
| Third Group Layers | 9 | Standard Conv2D | 0.1454 | 0.7542 | 1 |
| | 10 | Standard Conv2D | 0.1454 | | 1 |
| | 11 | Dense/Linear | 0.2909 | | 2 |
| | 12 | Dense/Linear | 0.1454 | | 2 |
| | PWC | | 1 | 1 | |

FIG. 8

900A

| Type Of Layer (402) | Contribution To Trainable Parameter (902) | Contribution To Computation Cost (904) | Layer Score Reference (906) |
|---|---|---|---|
| Standard Convolutional | 0 | 1 | 1 |
| Depth wise convolution | 0 | 1 | 1 |
| Dilated convolution | 0 | 1 | 1 |
| Dense / fully connected | 1 | 0 | 2 |

FIG. 9A

900B

| Type Of Layer (402) | Contribution To Computation Cost (904) | Contribution To Trainable Parameter (902) | Layer Score Reference (906) |
|---|---|---|---|
| Standard Convolutional | 1 | 0 | 2 |
| Depth wise convolution | 1 | 0 | 2 |
| Dilated convolution | 1 | 0 | 2 |
| Dense / fully connected | 0 | 1 | 1 |

FIG. 9B

1000

502 1002 402 508 702 802

| Position of layers | Layer Index | Layers Type | Filter Contribution score | Group Score | Layer Score |
|---|---|---|---|---|---|
| First Group Layers | 4 | Standard Conv2D | 0.0181 | 0.0271 | 1 |
| | 3 | Standard Conv2D | 0.0181 | | 1 |
| | 2 | Standard Conv2D | 0.009 | | 1 |
| | 1 | Standard Conv2D | 0.009 | | 1 |
| Second Group Layers | 8 | Standard Conv2D | 0.0727 | 0.218 | 1 |
| | 7 | Standard Conv2D | 0.0727 | | 1 |
| | 6 | Standard Conv2D | 0.0363 | | 1 |
| | 5 | Standard Conv2D | 0.0363 | | 1 |
| Third Group Layers | 11 | Standard Conv2D | 0.2909 | 0.7542 | 2 |
| | 12 | Standard Conv2D | 0.1454 | | 2 |
| | 10 | Dense/Linear | 0.1454 | | 1 |
| | 9 | Dense/Linear | 0.1454 | | 1 |
| | PWC | | 1 | 1 | |

FIG. 10

1100

| Position of layers (502) | Layer Index (1002) | Layers Type (402) | Filter Contribution Score (508) | Group Score (702) | Layer Score (802) | Clusters (1102) |
|---|---|---|---|---|---|---|
| First Group Layers | 4 | Standard Conv2D | 0.0181 | 0.0271 | 1 | $F_1$ |
| | 3 | Standard Conv2D | 0.0181 | | 1 | |
| | 2 | Standard Conv2D | 0.009 | | 1 | $F_2$ |
| | 1 | Standard Conv2D | 0.009 | | 1 | |
| Second Group Layers | 8 | Standard Conv2D | 0.0727 | 0.218 | 1 | $S_1$ |
| | 7 | Standard Conv2D | 0.0727 | | 1 | |
| | 6 | Standard Conv2D | 0.0363 | | 1 | $S_2$ |
| | 5 | Standard Conv2D | 0.0363 | | 1 | |
| Third Group Layers | 11 | Standard Conv2D | 0.2909 | 0.7542 | 2 | $T_1$ |
| | 12 | Standard Conv2D | 0.1454 | | 2 | |
| | 10 | Dense/Linear | 0.1454 | | 1 | $T_2$ |
| | 9 | Dense/Linear | 0.1454 | | 1 | |
| | PWC | | 1 | 1 | | |

FIG. 11

1200

| 502 | 1002 | 402 | 508 | 702 | 802 | 1102 | 1202 |
|---|---|---|---|---|---|---|---|
| Position of layers | Layer Index | Layers Type | Filter Contribution Score | Group Score | Layer Score | Cluster | Cluster-wise Position Score |
| First Group Layers | 4 | Standard Conv2D | 0.0181 | 0.0271 | 1 | $I_1$ | 0.01355 |
| | 3 | Standard Conv2D | 0.0181 | | 1 | | |
| | 2 | Standard Conv2D | 0.009 | | 1 | $I_2$ | 0.01355 |
| | 1 | Standard Conv2D | 0.009 | | 1 | | |
| Second Group Layers | 8 | Standard Conv2D | 0.0727 | 0.218 | 1 | $M_1$ | 0.109 |
| | 7 | Standard Conv2D | 0.0727 | | 1 | | |
| | 6 | Standard Conv2D | 0.0363 | | 1 | $M_2$ | 0.109 |
| | 5 | Standard Conv2D | 0.0363 | | 1 | | |
| Third Group Layers | 11 | Standard Conv2D | 0.2909 | 0.7542 | 2 | $D_1$ | 0.3771 |
| | 12 | Standard Conv2D | 0.1454 | | 2 | | |
| | 10 | Dense/Linear | 0.1454 | | 1 | $D_2$ | 0.3771 |
| | 9 | Dense/Linear | 0.1454 | | 1 | | |

FIG. 12

1300

| 502 | 1002 | 402 | 508 | 702 | 802 | 1102 | 1202 | 1302 |
|---|---|---|---|---|---|---|---|---|
| Position of layers | Layer Index | Layers Type | Filter Contribution Score | Group Score | Layer Score | Cluster | Cluster-wise Position Score | layer-wise position score |
| First Group Layers | 4 | Standard Conv2D | 0.0181 | 0.0271 | 1 | $I_1$ | 0.01355 | 0.006775 |
| | 3 | Standard Conv2D | 0.0181 | | 1 | | | 0.006775 |
| | 2 | Standard Conv2D | 0.009 | | 1 | $I_2$ | 0.01355 | 0.006775 |
| | 1 | Standard Conv2D | 0.009 | | 1 | | | 0.006775 |
| Second Group Layers | 8 | Standard Conv2D | 0.0727 | 0.218 | 1 | $M_1$ | 0.109 | 0.0545 |
| | 7 | Standard Conv2D | 0.0727 | | 1 | | | 0.0545 |
| | 6 | Standard Conv2D | 0.0363 | | 1 | $M_2$ | 0.109 | 0.0545 |
| | 5 | Standard Conv2D | 0.0363 | | 1 | | | 0.0545 |
| Third Group Layers | 11 | Standard Conv2D | 0.2909 | 0.7542 | 2 | $D_1$ | 0.3771 | 0.18855 |
| | 12 | Standard Conv2D | 0.1454 | | 2 | | | 0.18855 |
| | 10 | Dense/Linear | 0.1454 | | 1 | $D_2$ | 0.3771 | 0.18855 |
| | 9 | Dense/Linear | 0.1454 | | 1 | | | 0.18855 |

FIG. 13

1400

| Position of layers (502) | Layer Index (1002) | Layers Type (402) | Filter Contribution Score (508) | Group Score (702) | Layer Score (802) | Cluster (1102) | Cluster-wise Position Score (1202) | layer-wise position score (1302) | PCP (1402) |
|---|---|---|---|---|---|---|---|---|---|
| First Group Layers | 4 | Standard Conv2D | 0.0181 | 0.0271 | 1 | $I_1$ | 0.01355 | 0.006775 | 0.0124 |
| | 3 | Standard Conv2D | 0.0181 | | 1 | | | 0.006775 | 0.0124 |
| | 2 | Standard Conv2D | 0.009 | | 1 | $I_2$ | 0.01355 | 0.006775 | 0.0079 |
| | 1 | Standard Conv2D | 0.009 | | 1 | | | 0.006775 | 0.0079 |
| Second Group Layers | 8 | Standard Conv2D | 0.0727 | 0.218 | 1 | $M_1$ | 0.109 | 0.0545 | 0.0727 |
| | 7 | Standard Conv2D | 0.0727 | | 1 | | | 0.0545 | 0.0727 |
| | 6 | Standard Conv2D | 0.0363 | | 1 | $M_2$ | 0.109 | 0.0545 | 0.0363 |
| | 5 | Standard Conv2D | 0.0363 | | 1 | | | 0.0545 | 0.0363 |
| Third Group Layers | 11 | Standard Conv2D | 0.2909 | 0.7542 | 2 | $D_1$ | 0.3771 | 0.18855 | 0.334 |
| | 12 | Standard Conv2D | 0.1454 | | 2 | | | 0.18855 | 0.1356 |
| | 10 | Dense/Linear | 0.1454 | | 1 | $D_2$ | 0.3771 | 0.18855 | 0.1356 |
| | 9 | Dense/Linear | 0.1454 | | 1 | | | 0.18855 | 0.1356 |

FIG. 14

1500

| 502 | 1002 | 402 | 508 | 702 | 802 | 1102 | 1202 | 1302 | 1402 | 1502 | 1504 |
|---|---|---|---|---|---|---|---|---|---|---|---|
| Position of layers | Layer Index | Layers Type | Filter Contribution Score | Group Score | Layer Score | Cluster | Cluster-wise Position Score | layer-wise position score | PCP | Second number of Filters to be pruned | Layer-Wise Pruning Ratio |
| First Group Layers | 4 | Standard Conv2D | 0.0181 | 0.0271 | 1 | $I_1$ | 0.01355 | 0.006775 | 0.0124 | 10 | 1.136363636 |
| | 3 | Standard Conv2D | 0.0181 | | 1 | | | 0.006775 | 0.0124 | 10 | 1.136363636 |
| | 2 | Standard Conv2D | 0.009 | | 1 | $I_2$ | 0.01355 | 0.006775 | 0.0079 | 6 | 0.681818182 |
| | 1 | Standard Conv2D | 0.009 | | 1 | | | 0.006775 | 0.0079 | 6 | 0.681818182 |
| Second Group Layers | 8 | Standard Conv2D | 0.0727 | 0.218 | 1 | $M_1$ | 0.109 | 0.0545 | 0.0727 | 63 | 7.159090909 |
| | 7 | Standard Conv2D | 0.0727 | | 1 | | | 0.0545 | 0.0727 | 63 | 7.159090909 |
| | 6 | Standard Conv2D | 0.0363 | | 1 | $M_2$ | 0.109 | 0.0545 | 0.0363 | 31 | 3.522727273 |
| | 5 | Standard Conv2D | 0.0363 | | 1 | | | 0.0545 | 0.0363 | 31 | 3.522727273 |
| Third Group Layers | 11 | Standard Conv2D | 0.2909 | 0.7542 | 2 | $D_1$ | 0.3771 | 0.18855 | 0.334 | 293 | 33.29545455 |
| | 12 | Standard Conv2D | 0.1454 | | 2 | | | 0.18855 | 0.1356 | 119 | 13.52272727 |
| | 10 | Dense/Linear | 0.1454 | | 1 | $D_2$ | 0.3771 | 0.18855 | 0.1356 | 119 | 13.52272727 |
| | 9 | Dense/Linear | 0.1454 | | 1 | | | 0.18855 | 0.1356 | 129 | 14.65909091 |
| | | | | | | | | | | 880 | 100 |

FIG. 15

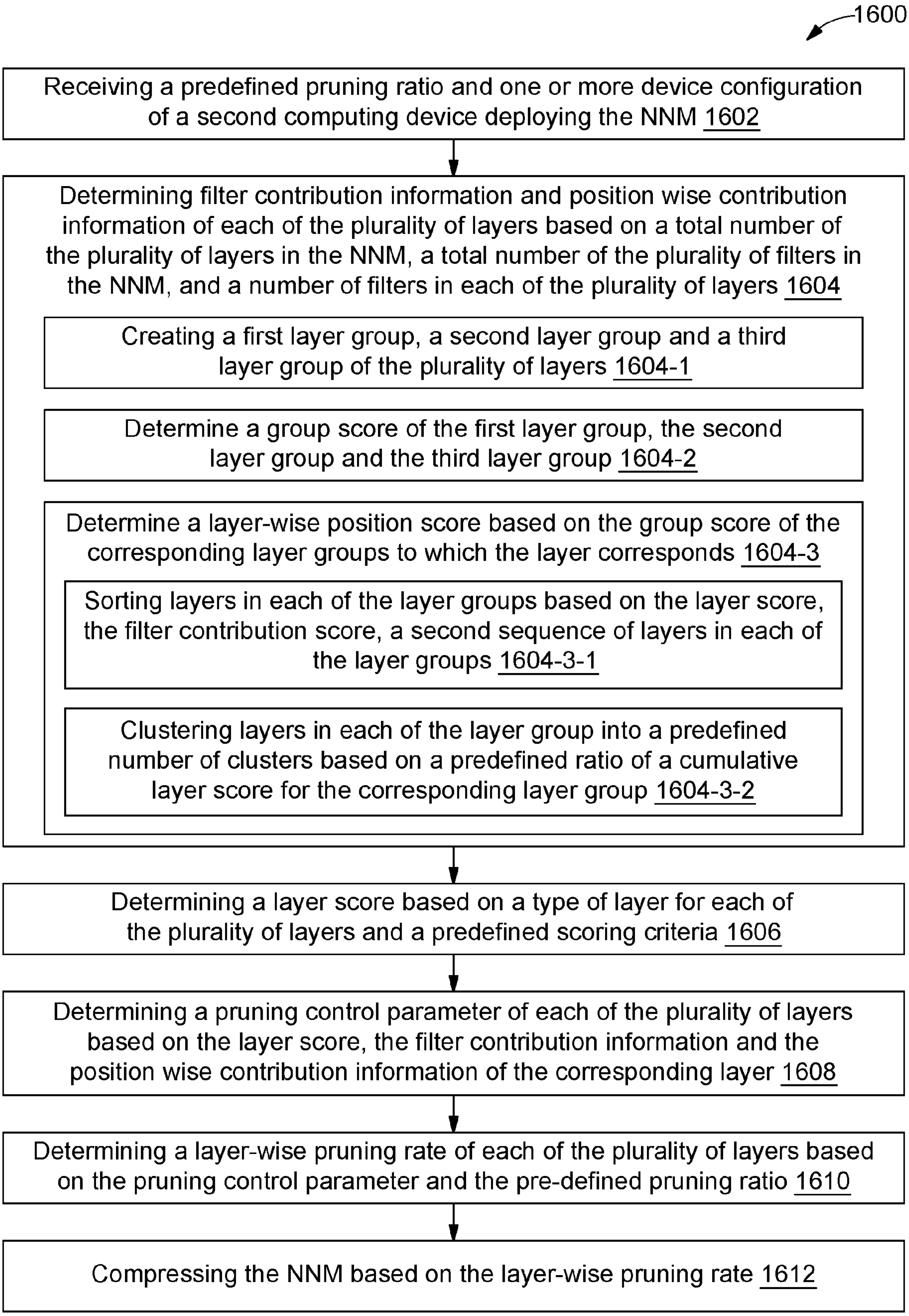
1600
Receiving a predefined pruning ratio and one or more device configuration of a second computing device deploying the NNM 1602
Determining filter contribution information and position wise contribution information of each of the plurality of layers based on a total number of the plurality of layers in the NNM, a total number of the plurality of filters in the NNM, and a number of filters in each of the plurality of layers 1604
Creating a first layer group, a second layer group and a third layer group of the plurality of layers 1604-1
Determine a group score of the first layer group, the second layer group and the third layer group 1604-2
Determine a layer-wise position score based on the group score of the corresponding layer groups to which the layer corresponds 1604-3
Sorting layers in each of the layer groups based on the layer score, the filter contribution score, a second sequence of layers in each of the layer groups 1604-3-1
Clustering layers in each of the layer group into a predefined number of clusters based on a predefined ratio of a cumulative layer score for the corresponding layer group 1604-3-2
Determining a layer score based on a type of layer for each of the plurality of layers and a predefined scoring criteria 1606
Determining a pruning control parameter of each of the plurality of layers based on the layer score, the filter contribution information and the position wise contribution information of the corresponding layer 1608
Determining a layer-wise pruning rate of each of the plurality of layers based on the pruning control parameter and the pre-defined pruning ratio 1610
Compressing the NNM based on the layer-wise pruning rate 1612

FIG. 16

Europäisches Patentamt
European Patent Office
Office européen des brevets

# EUROPEAN SEARCH REPORT

Application Number
EP 23 20 6623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO ZHIPENG ET AL: "Data-Efficient Adaptive Global Pruning for Convolutional Neural Networks in Edge Computing", ICC 2023 - IEEE INTERNATIONAL CONFERENCE ON COMMUNICATIONS, IEEE, 28 May 2023 (2023-05-28), pages 6633-6638, XP034451896, DOI: 10.1109/ICC45041.2023.10278581 [retrieved on 2023-10-23] * abstract * * Section II.B; page 6635 * * Algorithm 1; page 6636 * ----- | 1-12 | INV. G06N3/082 |
| X | US 2022/253708 A1 (TAMADA RAJESH KUMAR [IN] ET AL) 11 August 2022 (2022-08-11) * claim 1; figures 4-6 * ----- | 1-12 | |
| | | | TECHNICAL FIELDS SEARCHED (IPC) |
| | | | G06N |

The present search report has been drawn up for all claims

| Place of search | Date of completion of the search | Examiner |
|---|---|---|
| The Hague | 21 March 2024 | Fonseca dos Santos |

3

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 20 6623

This annex lists the patent family members relating to the patent documents cited in the above-mentioned European search report. The members are as contained in the European Patent Office EDP file on
The European Patent Office is in no way liable for these particulars which are merely given for the purpose of information.

21-03-2024

| Patent document cited in search report | Publication date | Patent family member(s) | Publication date |
|---|---|---|---|
| US 2022253708 A1 | 11-08-2022 | CN 114925822 A | 19-08-2022 |
| | | US 2022253708 A1 | 11-08-2022 |

EPO FORM P0459

For more details about this annex : see Official Journal of the European Patent Office, No. 12/82